# EUROPÄISCHE PATENTSCHRIFT

(11) **EP 1 097 329 B1**
(45) Veröffentlichungstag und Bekanntmachung des Hinweises auf die Patenterteilung: **05.03.2003**
(21) Anmeldenummer: 99936894.7
(22) Anmeldetag: 16.07.1999
(51) Int. Cl.: F16K 27/04

(54) **UNIVERSALE MISCHBATTERIEKARTUSCHE**
UNIVERSAL CARTRIDGE FOR A MIXER FAUCET
CARTOUCHE UNIVERSELLE POUR MITIGEUR

(30) Priorität: 22.07.1998 HU 9801648
(43) Veröffentlichungstag der Anmeldung: 09.05.2001
(73) Patentinhaber: Kerox-Multipolar II. KFT., 2049 Diosd (HU)
(72) Erfinder: BAKI, Gyözö, H-1111 Budapest (HU)
(74) Vertreter: Schulte, Jörg, Dipl.-Ing.
(86) Internationale Anmeldenummer: HU9900052
(87) Internationale Veröffentlichungsnummer: WO00005524

(56) Entgegenhaltungen:
- EP-A- 0 684 416
- EP-A- 0 771 980

## Beschreibung

In der technischen Praxis sind solche als Kartusche bezeichneten Mischbatterieeinsätze bereits bekannt, die das Absperren von Kalt-Warmwassersträngen sowie deren bedarfsgemäßes Öffnen, das Mischen von Kalt- und Warmwasser sowie das Umlenken zu einem Ausfluss der Batterie mit einer einzigen Baugruppe, einer sog. Kartusche, verwirklichen.

Diese Kartuschen enthalten in ihrer Grundausführung ein durch ein Unterteil abgeschlossenes Kartuschengehäuse, eine im Inneren des Kartuschengehäuses befestigte Einlaufscheibe sowie an der der Einlaufscheibe mit Unterteil gegenüberliegenden Seite eine verschiebbare und verdrehbare Regelscheibe.

Die Bewegung der Regelscheibe sichert ein im Hebelhalter gelagerter Bewegungshebel über einen Keramikantrieb.

Der den Bewegungshebel haltende Hebelhalter ist im Kartuschengehäuse drehbar angebracht.

In der Einlaufscheibe sowie in der Regelscheibe sind entsprechende Bohrungen bzw. Hohlräume zur Regelung des Einlaufs von Kalt- bzw. Warmwasser und zum Auslauf von Mischwassers ausgeführt.

Die oben beschriebenen Kartuschen einfacherer Ausführung sind weit verbreitet, weil diese ohne weitere Ergänzungen zur Erfüllung der Grundfunktionen geeignet sind, die von einer in einer Batterie verwendeten Kartusche erwartet werden.

Ständig häufiger tritt jedoch der Anspruch auf, dass die Kartusche auch sonstige Funktionen versehen können soll.

Unter den zu versehenden Funktionen müssen am häufigsten der Druckausgleich, die Anwendung von Rückschlagventilen bzw. die Umlenkung gelöst werden.

Der Ausgleich des Druckes des in die Kartusche gelangenden Kalt- bzw.Warmwassers ist eine sehr wichtige Aufgabe, weil die plötzliche Änderung des Druckes in irgendeinem Wasserstrang ohne Druckausgleich das Verbrühen oder einen Kaltwasserschock des Benutzers verursachen kann.

Die Verminderung des Druckes des Kaltwassers kommt häufig vor, wenn in der Nähe der Mischbatterie an das Wassernetz eine mit Kaltwasser betriebene Armatur, z. B. Toilettenspüler, montiert ist, weil bei deren Betätigung der Druck des Kaltwassers plötzlich abnimmt und deshalb ohne Druckausgleich das aus der Katusche ausfließende Wasser plötzlich erhitzt wird.

Rückschlagventile sind dann notwendig, wenn die Möglichkeit besteht, dass aus einem Wasserstrang mit höherem Druck im geöffneten Zustand der Kartusche Flüssigkeit in den anderen Strang gelangen soll.

Eine Umlenkung ist jedoch dann erforderlich, wenn man die Kartusche an eine dem üblichen Anschluss entgegengesetzte Kalt- und Warmwassereinspeisung anschließen möchte, z. B. an zwei Seiten einer Badezimmerwand.

Für die obigen Aufgaben sind nach dem Stand der Technik verschiedene Lösungen bekannt.

Das USA-Patent Nr. 5,725,010 macht mit einer solchen Druckausgleich- und Mischbatterie bekannt, in der die Druckausgleicharmatur im Batteriekörper zwischen der traditionellen Kartusche und den Wasseranschlüssen angeordnet ist.

Ebenfalls eine Kartusche mit Druckausgleich stellt auch die Patentanmeldung EP 0 559 998 vor, deren Wesen darin besteht, dass das Unterteil der traditionellen Kartusche mit einer Erhebung ausggeführt ist, in der senkrecht zu Symmetrieachse der Kartusche ein Sitz ausgebildet ist, in dem sich, ebenfalls senkrecht zur Symmetrieachse der Kartusche, der Druckausgleich befindet.

Die Rückschlagventile werden im Allgemeinen auf die einführenden Wasserstränge montiert, diese bilden also gemäß der üblichen Praxis mit der Kartusche keine organische Einheit.

Zur Lösung der Umlenkung ist beispielsweise das USA-Patent 4,676,270 bekannt, bei dem die Umkehrung ein von der Kartusche mechanisch unabhängiger Zylinder ausführt.

Aus der Patentanmeldung EP 0 771 980 ist auch eine solche Lösung bekannt, bei der die Konstruktionselemente für die verschiedenen Funktionen von dazwischengeschalteten Anschlusselementen am jeweiligen Kartuschengehäuse befestigt werden.

Die EP-A-0 684 416 zeigt und beschreibt eine Kartusche gemäß Oberbegriff von Anspruch 1, deren Unterteil eine Anschlussstelle mit den Einlassöffnungen für Warm- und Kaltwasser aufweist. In dieser Anschlussstelle ist ein Einsatz in Form eines Rückschlagventils angeordnet.

Ziel der vorliegenden Erfindung zur Vermeidung der obigen ungünstigen Eigenschaften ist die Ausführung einer auch ohne besondere Fachkenntnisse allgemein anwendbaren Lösung zur Ausstattung der Kartuschen, die selbst bekannt sind, mit verschiedene Funktionen erfüllenden Elementen.

Aufgabe der vorliegenden Erfindung ist die Ausführung einer solchen Kartusche, die schnell und einfach ermöglicht, dass aus der Kartusche, die selbst bekannt ist, und aus verschiedene Ergänungsfunktionen sichernden Elementen einfach und schnell eine entsprechend geänderte Anordnung erreicht wird.

Gemäß der vorliegenden Erfindung wird die obige Aufgabe mit einer solchen universellen - hauptsächlich dem Mischen von Kalt- und Warmwasser dienenden - Mischbatterie mit Kartusche gemäß Anspruch 1 gelöst.

Eine vorteilhafte Ausführungsform der erfindungsgemäßen Mischbatterie ist Gegenstand des Anspruches 2.

Die Batteriekartusche gemäß der Erfindung wird auf der Grundlage der auf den beigefügten Zeichnungen als Beispiel dargestellten Ausführungsformen im Folgendem ausführlich vorgestellt.
- Abbildung 1:: Schnitt der Seitenansicht des Grundtyps der Kartusche mit Einsatz gemäß der Erfindung,
- Abbildung 2:: Schnitt der Seitenansicht des Grundtyps der Kartusche ohne Einsatz gemäß der Erfindung,
- Abbildung 3:: Seitenansicht des Grundtyps der Kartusche gemäß der Erfindung,
- Abbildung 4:: Unteransicht des Grundtyps der Kartusche gemäß der Erfindung,
- Abbildung 5:: Ausführung des normalen Einsatzes der Kartusche gemäß der Erfindung,
- Abbildung 6:: Ausführung des Druckausgleicheinsatzes der Kartusche gemäß der Erfindung,
- Abbildung 7:: Ausführung des Umlenkeinsatzes der Kartusche gemäß der Erfindung.

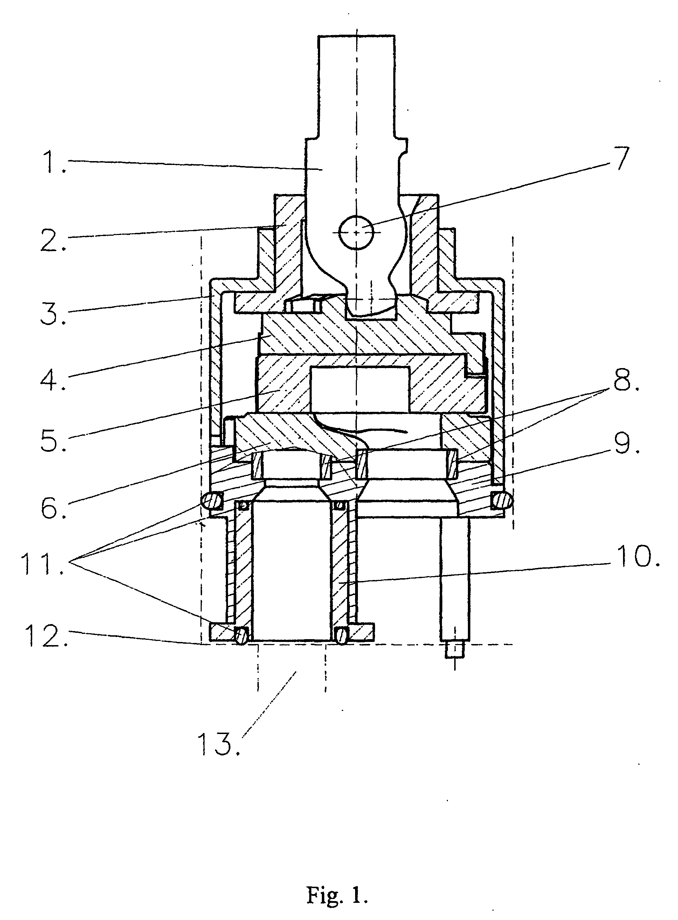

Auf der Abbildung 1 ist zu sehen, dass im Batteriekörper 12 einer Batterie das Gehäuse 3 untergebracht ist, in dem sich verdrehbar der Hebelhalter 2 befindet.

Im Hebelhalter 2 ist der Bewegungshebel 1, der über den Keramikantrieb 4 mit der Regelscheibe 5 in Verbindung steht, um die Drehachse 7 drehbar gelagert.

Die Regelscheibe 5 sitzt auf einer Einlaufscheibe 6, in der Öffnungen zur Einleitung von Kalt- und Warmwasser bzw. zur Ableitung des gemischten Wassers ausgeführt sind.

Die Einlaufscheibe 6 sitzt auf dem an das Gehäuse 3 angeschlossenen Unterteil 9, in dem sich die Anschlußstelle 14 für die Aufnahme des Einsatzes 10 befindet.

In den Öffnungen des Unterteils 9 und der Einlaufscheibe 6 sitzen Dichtungen aus Gummi 8, während zwischen dem Batteriekörper 12 und dem Gehäuse 3, weiterhin zwischen dem Einsatz 10 und dem Unterteil 9 sowie zwischen dem einen Ende des Einsatzes 10 und dem Batteriekörper 12 die Dichtungen 11 sitzen. Im Batteriekörper 12 sind die Anschlußgänge 13 ausgeführt.

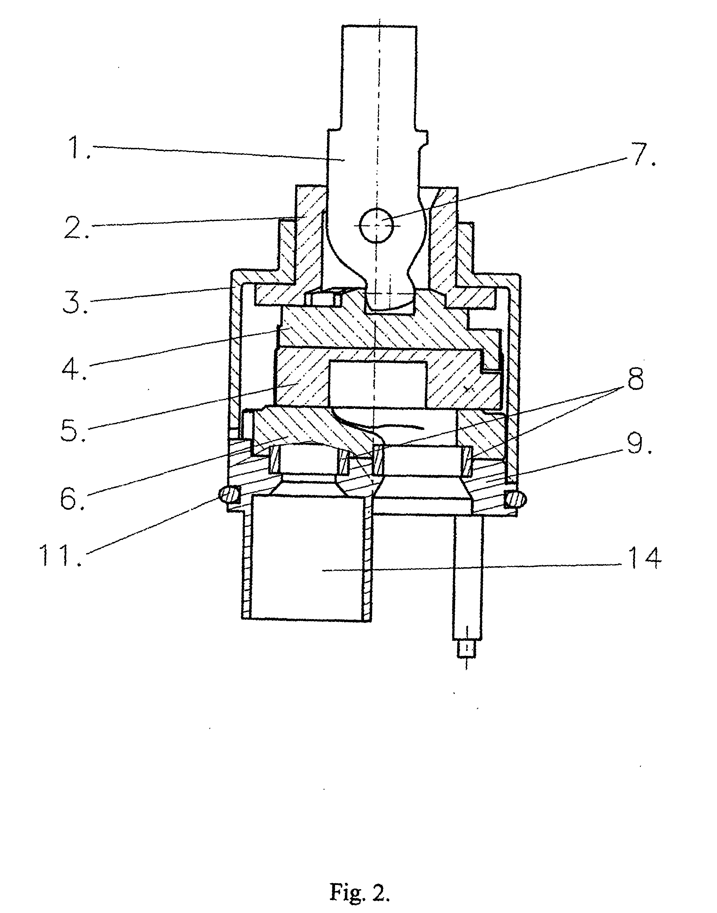

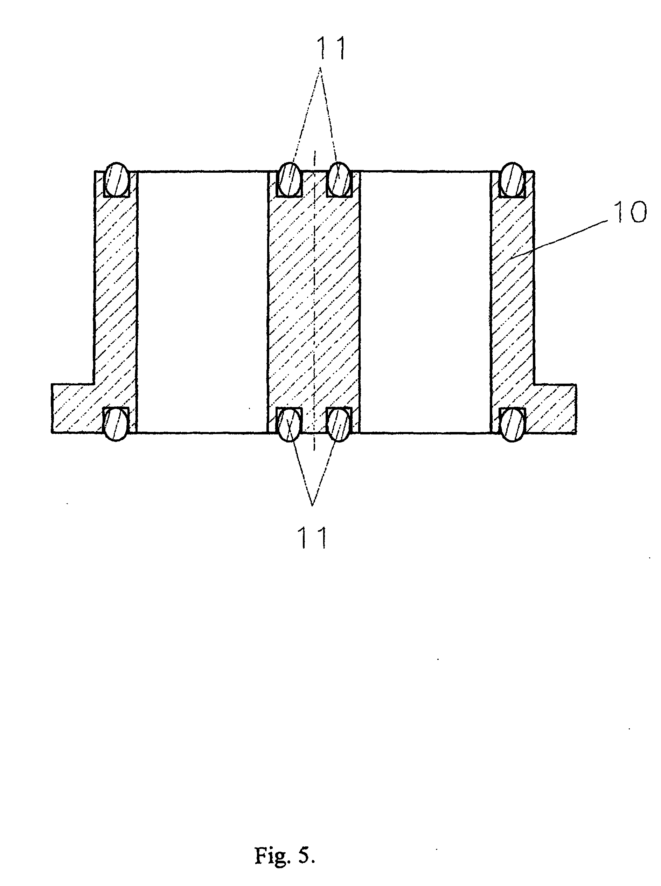

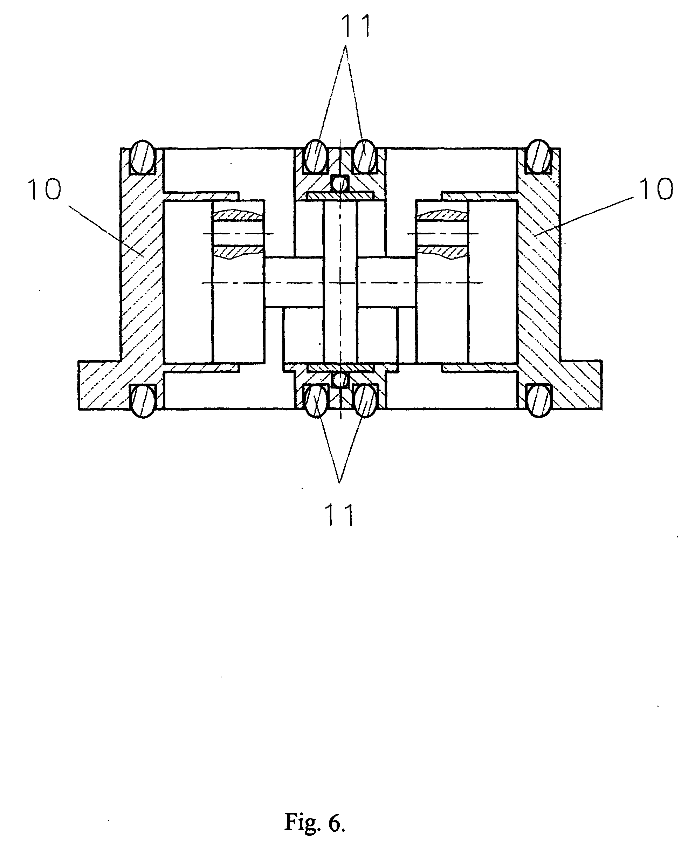

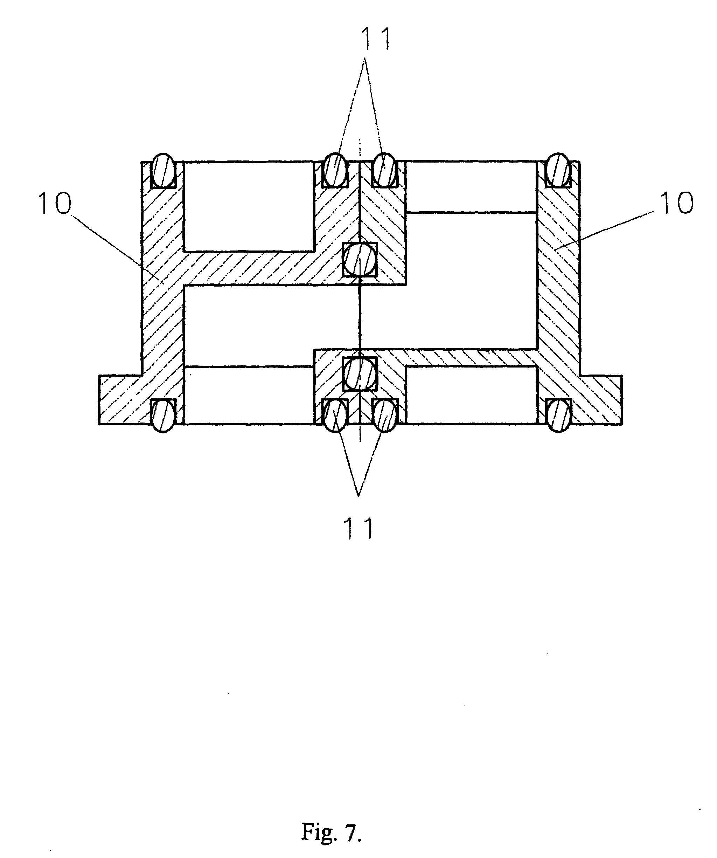

Die Abbildung 2 stellt die Batteriekartusche gemäß Abbildung 1 ohne Einsatz 10 dar.

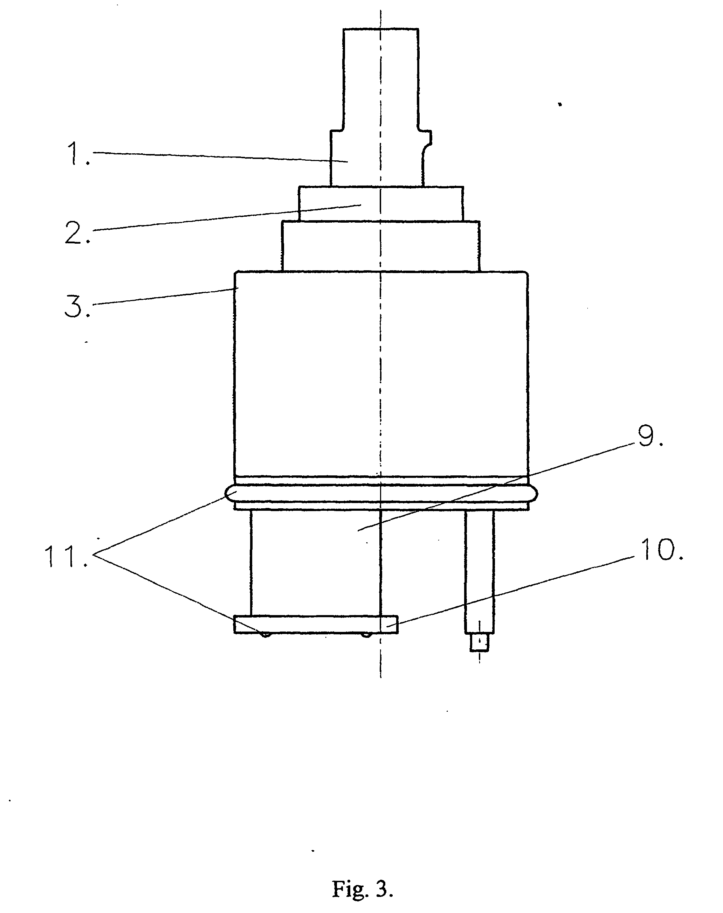

Die Abbildung 3 ist die Seitenansicht der auf der Abbildung 1 dargestellten Kartusche.

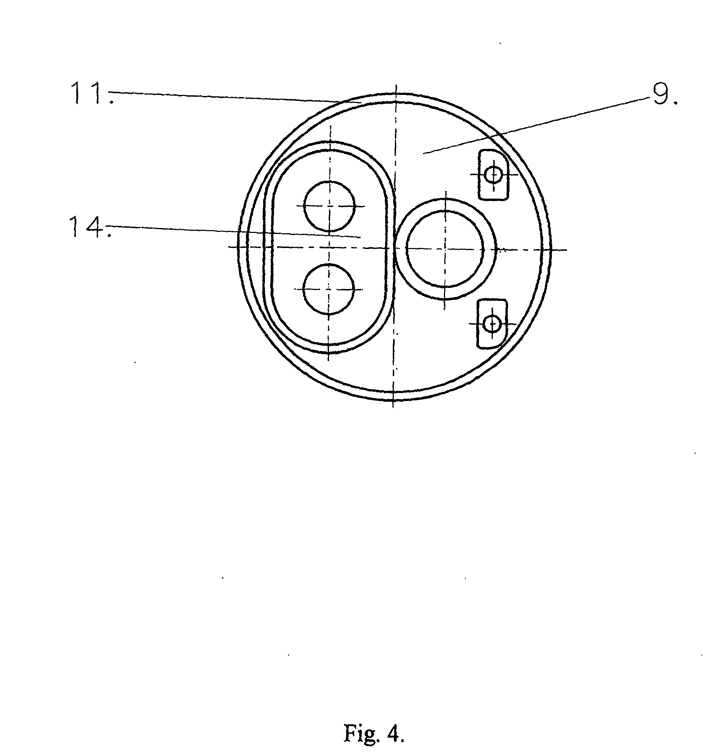

Die Abbildung 4 zeigt das Unterteil 9 in der Unteransicht.
Der auf der Abbildung 5 dargestellte Einsatz 10 ist zur geraden Durchführung geeignet.
Der auf der Abbildung 6 dargestellte Einsatz 10 ist als Druckausgleicheinsatz ausgeführt.
Der auf der Abbildung 7 dargestellte Einsatz 10 ist als Umlenkeinsatz ausgeführt.

Die Funktion der Kartusche gemäß der Erfindung wird im Folgenden ausführlich vorgestellt.

Durch Betätigung des auf der Abbildung 1 dargestellten Bewegungshebels 1 kann über den Keramikantrieb 4 die relative Lage von Regelscheibe 5 und Einlaufscheibe 6 geändert werden.

Durch Absperren bzw. durch Überbrücken der in der Einlaufscheibe 6 vorhandenen Öffnungen durch die Regelscheibe 5 können auf die bekannte Weise über die im Unterteil 9 ausgeführte Öffnung Temperatur und Menge des in den Batteriekörper 12 strömenden Wassers geändert werden.

Der in der Anschlußstelle 14 in Achsrichtung der Kartusche angebrachte Einsatz 10 sicheit die Verbindung zwischen den im Batteriekörper ausgeführten Anschlußgängen 13 sowie den Einlauföffnungen des Unterteils 9, die zwischen dem Batteriekörper 12 und dem Einsatz 10 befindlichen Dichtungen 11 sichern die abgedichtete Trennung dieser Verbindungsräume und des Innenraumes des Batteriekörpers 12.

Im Gehäuse 3 der Kartusche, das bekannt ist, gelangt also das Kalt- und Warmwasser aus den Anschlußbohrungen 13 des Batteriekörpers 12 über den jeweiligen Einsatz 10 in die im Unterteil 9 der Kartusche befindlichen Öffnungen, danach in die Bohrungen bzw. Öffnungen der Einlaufscheibe 6.

Mit dem Austausch des Einsatzes 10 kann die mit dem Einsatz 10 montierte Kartusche verschiedene Funktionen ausführen, so mit dem Einsatz 10 gemäß der Abbildung 5 einen einfachen Einlauf, mit dem Einsatz 10 gemäß der Abbildung 6 einen Druckausgleich und mit dem Einsatz 10 gemäß der Abbildung 7 eine Umlenkung.

Die Einsätze 10 befinden sich immer in der Längsachse der Kartusche an der Anschlußstelle 14, d.h. die Dichtungen 11 gelangen bei Einsetzen der Kartusche in den Batteriekörper 12 nach dem Einbau unter Druck und damit sichern sie eine entsprechende Abdichtung.

Vorteile der Kartusche gemäß der Erfindung sind, dass die Funktion der Kartusche mit dem einfachen und besondere Fachkenntnisse nicht erfordernden Austausch des Einsatzes 10 mit den zur Verfügung stehenden Einsätzen 10 beliebig ausgeführt bzw. geändert werden kann.

### Elementenverzeichnis

### Universale Mischbatteriekartusche

- 1: Bewegungshebel
- 2: Hebelhalter
- 3: Gehäuse
- 4: Keramikantrieb
- 5: Regelscheibe
- 6: Einlaufscheibe
- 7: Drehachse
- 8: Dichtung aus Gummi
- 9: Unterteil
- 10: Einsatz
- 11: Dichtung
- 12: Batteriekörper
- 13: Anschlussgänge
- 14: Anschusstelle

## Patentansprüche

1. Batteriekartusche zur Verwendung in einem Batteriekörper (12) - hauptsächlich zum Mischen von Kalt- und Warmwasser -, die über zwei, übereinander angeordnete, miteinander eine Flächenabdichtung bildende Scheiben (5, 6) verfügt, eine feststehende Einlaufscheibe (6) und eine auf der Einlaufscheibe (6) verschiebbare und verdrehbare Regelscheibe (5), wobei die Regelscheibe (5) mit einem in einem Hebelhalter (2) drehbar gelagerten Bewegungshebel (1) mechanisch über einen Keramikantrieb (4) verbunden und der Hebelhalter (2) im Kartuschengehäuse (3) drehbar angeordnet ist und wobei das Unterteil (9) des Kartuschengehäuses (3) an der der Einlaufscheibe (6) gegenüberliegenden, dem Batteriekörper (12) zugewandten Seite eine Anschlussstelle (14) aufweist, deren Öffnung im Wesentlichen in Längsrichtung des Kartuschengehäuses (3) verläuft, und wobei in der Auschlussstelle (14) zwischen den im Batteriekörper (12) ausgeführten Anschlussgängen (13) sowie den Einlassöffnungen des Unterteils (9) ein austauschbar ausgebildeter Einsatz (10) abgedichtet augeordnet ist,
**dadurch gekennzeichnet, dass** die Auschlussstelle (14) derart ausgebildet ist, dass sie die im Unterteil (9) des Kartuschengehäuses (3) vorgesehenen Einlassöffnungen mit aussenseitig umfasst, und dass die Abdichtung der Einlassöffnungen gegeneinander durch den austauschbaren Einsatz erfolgt.

2. Batteriekartusche nach Anspruch 1,
**dadurch gekennzeichnet,**
**dass** Dichtungen (11) zwischen dem Einsatz (10) und dem Unterteil (9) sowie zwischen dem einen Ende des Einsatzes (10) und dem Batteriekörper (12) angeordnet sind.

## Claims

1. Battery cartridge for use in a battery body (12) - primarily for mixing cold and warm water - comprising two discs (5, 6) arranged one above the other and together forming a planar seal, a fixed inlet disc (6) and a control disc (5) which is displaceable and rotatable on the inlet disc (6), the control disc (5) comprising a movement lever (1) rotatably mounted in a lever holder (2) being mechanically connected via a ceramic drive (4) and the lever holder (2) being rotatably arranged in the cartridge housing (3) and the lower part (9) of the cartridge housing (3) at the side opposing the inlet disc (6) and facing the battery body (12) comprising a connecting point (14), of which the aperture substantially extends in the longitudinal direction of the cartridge housing (3), and a replaceable insert (10) being arranged in a sealed manner in the connecting point (14) between the connecting passages (13) constructed in the battery body (12) and the inlet apertures of the lower part (9), **characterised in that** the connecting point (14) is constructed in such a way that it encompasses the inlet apertures provided in the lower part (9) of the cartridge housing (3) only at the outside, and **in that** the inlet apertures are sealed from one another by the replaceable insert.

2. Battery cartridge according to claim 1, **characterised in that** seals (11) are arranged between the insert (10) and the lower part (9) and between the one end of the insert (10) and the battery body (12).

## Revendications

1. Cartouche de batterie destinée à être utilisée dans un corps de batterie (12) - principalement pour mélanger de l'eau froide et de l'eau chaude -, qui comporte deux disques (5, 6) superposés et établissant entre eux une étanchéité de surface, un disque fixe d'entrée (6) et un disque de régulation (5) qui peut se translater et tourner sur le disque d'entrée (6), dans laquelle le disque de régulation (5) est relié mécaniquement, par l'intermédiaire d'un dispositif d'entraînement céramique (4), à un levier de déplacement (1) monté de manière à pouvoir tourner dans un support de levier (2), et le support de levier (2) est disposé de manière à pouvoir tourner dans le boîtier de cartouche (3), et dans laquelle la partie inférieure (9) du boîtier de cartouche (3) possède, sur le côté situé à l'opposé du disque d'entrée (6) et tourné vers le corps de batterie (12), une zone de raccordement (14), dont l'ouverture s'étend essentiellement dans la direction longitudinale du boîtier de cartouche (3), et dans laquelle un insert (10) agencé de façon interchangeable est disposé d'une manière étanche dans la zone de raccordement (14), entre les passages de raccordement (13) formés dans le corps de batterie (12), et les ouvertures d'entrée de la partie inférieure (9), **caractérisée en ce que** la zone de raccordement (14) est agencée de telle sorte qu'elle s'étend exclusivement sur le côté extérieur des ouvertures d'entrée, qui sont prévues dans la partie inférieure (9) du boîtier de cartouche (3) et et que l'étanchéité des ouvertures d'entrée les unes par rapport aux autres est réalisée au moyen de l'insert interchangeable.

2. Cartouche de batterie selon la revendication 1, **caractérisée en ce que** des garnitures d'étanchéité (11) sont disposées entre l'insert (10) et la partie inférieure (9) ainsi qu'entre une entrée de l'insert (10) et le corps de batterie (12).
